# FASCICULE DE BREVET EUROPEEN

(11) **EP 2 547 508 B1**
(45) Date de publication et mention de la délivrance du brevet: **25.06.2014**
(21) Numéro de dépôt: 11708767.6
(22) Date de dépôt: 04.03.2011
(51) Int. Cl.: B29C 69/02, B29C 37/00, B29C 43/22, B29C 55/18, B29C 73/16

(54) **PROCEDE ET DISPOSITIF DE FABRICATION D'UNE BANDE CONTINUE D'UN PRODUIT FORTEMENT COLLANT EMBALLE DANS UN FILM THERMOPLASTIQUE**
VERFAHREN UND VORRICHTUNG ZUR HERSTELLUNG EINES KONTINUIERLICHEN STREIFENS EINES IN EINER THERMOPLASTISCHEN FOLIE VERPACKTEN PRODUKTES MIT HOHER HAFTKTRAFT
METHOD AND DEVICE FOR MAKING A CONTINUOUS STRIP OF A HIGHLY ADHESIVE PRODUCT PACKAGED IN A THERMOPLASTIC FILM

(30) Priorité: 15.03.2010 FR 1051835
(43) Date de publication de la demande: 23.01.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: HINC, Henri, F-63540 Romagnat (FR); DUSSARDIER, Bruno, F-63720 Ennezat (FR); ROUQUET, Jacques, F-63119 Chateaugay (FR)
(74) Mandataire: Reynaud, Georges
(86) Numéro de dépôt international: PCT/EP2011/053280
(87) Numéro de publication internationale: WO 2011/113712

(56) Documents cités:
- FR-A1- 2 528 350
- US-A- 4 584 153

## Description

Le domaine de l'invention concerne la fabrication et la préparation de profilés réalisés à l'aide d'un produit élastomèrique fortement collant qui sont utilisés, par exemple, pour former des solutions auto-obturantes disposées dans les pneumatiques pour véhicules terrestres.

Ces matériaux se caractérisent également par une très faible dureté, un comportement élastique, c'est-à-dire qu'ils retrouvent leur forme initiale après une déformation, même de grande amplitude, et une température de ramollissement au-delà de laquelle ils deviennent plastiques, ce qui facilite leur mise en oeuvre.

Par définition, et par convention pour la bonne compréhension de la présente description, on considère qu'un produit a une très faible dureté lorsque, à l'état réticulé et fini, sa dureté est inférieure à 10 Shore A mesurée selon la norme ASTM D-2240 (1986), qu'il est très élastique lorsque, à l'état réticulé et fini, son élongation à la rupture mesurée selon la norme ASTM D-412 (1998) est supérieure à 500%, et qu'il est fortement collant lorsque, à l'état non réticulé, la distance parcourue sur tackmètre à bille est inférieure à 5cm. Les solutions auto-obturantes possèdent ces trois caractéristiques.

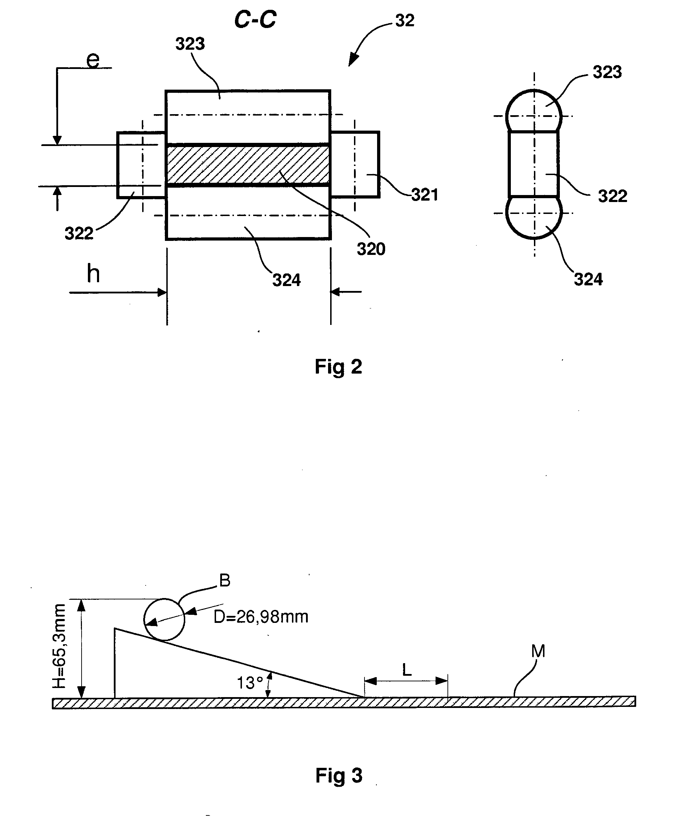

Le test de mesure du collant à l'aide d'un tackmètre à bille, dont la description est donnée dans la présente description,en référence à la figure 3, ne fait pas l'objet d'une norme standardisée. Cette mesure consiste à mesurer la longueur libre L parcourue sur la surface du matériau à mesurer par une bille B dotée d'une vitesse initiale donnée. Le tackmètre est formé par un plan incliné faisant un angle de 13° +/-0,08° par rapport au plan horizontal, recouvert d'un matériau lisse du type Mylar ®. La bille calibrée B, lisse 100CR6, en acier de grade 40, a une masse de 80,2 +/- 0,2 grammes et un diamètre de 26,98 +/-0,05 mm. Le matériau M à mesurer forme une couche d'épaisseur constante. Ce matériau est disposé sur une surface plane horizontale réglée à l'aide d'un niveau à bulle, et le plan incliné est placé sur la surface du matériau à mesurer de manière à laisser libre une longueur suffisante de la surface dudit matériau. La bille préalablement nettoyée à l'alcool éthylique à l'aide d'un chiffon sec, est placée sur le plan incliné de sorte que la hauteur H entre le plan formant la surface du matériau à mesurer et le plan horizontal tangent au pole supérieur de la bille soit égale à 63,5 +/-0,5mm. Après avoir été libérée, la bille prend son élan sur le plan incliné et roule librement d'une longueur L sur la surface plane du produit à mesurer. La mesure s'effectue dans les conditions de température Ta et d'hygrométrie HR ambiante (Ta= 23°C +/- 2°C, HR=50% +/-10%).

De tels produits peuvent avoir comme matrice des élastomères thermoplastiques (TPE) et en particulier des élastomères thermoplastiques styréniques (dit TPS), tels que les copolymères blocs styrène/butadiène (SB), les styrène/isoprène (SI), les styrène/isobutylène (SIB), les styrène/éthylène/propylène (SEP), les styrène/éthylène/butylène (SEB), ou encore, les styrène/butadiène/styrène (SBS), les styrène/isoprène/styrène (SIS), les styrène/butadiène/isoprène/styrène (SBIS), les styrène/isobutylène/styrène (SIBS), les styrène/éthylène/butylène/styrène (SEBS), les styrène/éthylène/propylène/styrène (SEPS), les styrène/éthylène/éthylène/propylène/ styrène (SEEPS), et les mélanges de ces copolymères, comme décrit par exemple dans les demandes WO 2008/080557 et WO 2009/059709 relatives à des compositions auto-obturantes utilisables dans des bandages pneumatiques.

Ils peuvent aussi avoir comme matrice des élastomères diéniques, notamment choisis dans le groupe constitué par les polybutadiènes, le caoutchouc naturel, les polyisoprènes de synthèse, les copolymères de butadiènes, les copolymères d'isoprène et les mélanges de ces élastomères, comme décrit par exemple dans les demandes WO 2010/009849 et WO 2010/009851 relatives également à des compositions auto-obturantes pour bandages pneumatiques.

Pour obtenir une très faible dureté, ils peuvent comporter des huiles d'extension en proportion élevée, en particulier pour les produits dont la matrice élastomère est un thermoplastique. Dans ce dernier cas, l'huile d'extension est introduite à proportion de 200 pce (pour cent d'elastomère en masse) ou plus.

Toutefois, le stockage, la manutention et la préparation de ces produits en vue de leur transformation, comporte des difficultés spécifiques. Il est en effet nécessaire de réaliser des produits intermédiaires se présentant sous la forme de bandes continues dont la section est adaptée pour pouvoir être utilisés comme produit entrant des procédés de mise en oeuvre et de transformation. Et il est impossible de réaliser de telles bandes sans précautions particulières, au risque de devoir affronter tous les inconvénients liés au fort pouvoir adhésif et à la déformabilité de ces produits auto-obturants.

On entend par bande continue une bande dans laquelle la longueur est supérieure de plusieurs ordres de grandeurs au rapport entre la section de la bande et ladite longueur. A titre indicatif on considère que l'on a affaire à une bande continue lorsque la longueur de la bande est cent fois supérieure au rapport entre la section de la bande et sa longueur.

Il est connu de l'état de la technique d'emballer des produits collants dans un film recouvrant toute la surface du produit, afin d'éviter l'agglomération desdits produits avec leurs supports, ou avec les produits adjacents, durant les phases de mise en oeuvre industrielles.

Classiquement, ces films sont choisis de telle sorte que leur formulation soit compatible avec le produit auto-obturant ce qui exonère l'utilisateur de la nécessité d'enlever le film lors de la transformation du produit. Plus spécifiquement, on s'arrange pour que le film fonde et se mélange totalement au produit auto-obturant lors de la mise en oeuvre dudit produit à une température généralement supérieure à la température du film.

On choisi donc un film dans un polymère dont la composition est compatible avec la formulation des produits auto-obturants décrits ci-dessus. On considère que des produits sont physiquement compatibles lorsque la température de transition vitreuse (Tgₘ) du mélange présente un seul maxima. La température de transition vitreuse est déterminée par calorimétrie différentielle à balayage (Diferential Scaning Calorimetry ou encore DSC). En désignant par Tgₚ la température de transition vitreuse du produit auto-obturant et par Tg_{f} la température de transition vitreuse du film, on observe que le mélange des deux composants a une température de transition vitreuse Tgₘ comprise entre Tgₚ et Tg_{f} selon la loi de Fox, telle que 1/Tgₘ = a/Tgₚ +(1-a)/Tg_{f} (dans laquelle Tg est exprimée en ° Kelvin), et que les températures de transition vitreuse du produit auto-obturant Tgₚ et celle du film Tg_{f} ne sont pas détectables dans ledit mélange.

Les films d'emballage convenant particulièrement bien à ce type d'application sont des films à base majoritaire d'Ethylène Vinyle Acétate (EVA) et plus particulièrement des films de cette famille tels que les films à base majoritaire de Polyoléfine Elastomère (POE) ou de Polyoléfine Plastomère (POP).

Le problème posé par l'utilisation des films d'emballage de toute nature, réside dans le fait que ces matériaux, lorsqu'ils sont présents au-delà d'une certaine proportion, modifient de manière sensible les propriétés des produits thermoplastiques qu'ils servent à emballer telles que, par exemple, le module d'élasticité ou la capacité d'élongation. Aussi, une attention particulière est nécessaire lorsque l'on désire déposer un film de protection à la surface de ces matériaux.

Pour les produits et les films considérés, les taux de dilution acceptables doivent être inférieurs à 1%, et sont, en règle générale, inférieurs à 0,5% en volume et, de préférence, inférieurs à 0,3%.

Aussi, pour réduire le taux de dilution, on cherche à réduire autant que faire se peut, l'épaisseur des films utilisés pour l'emballage de ces produits auto-obturants.

Pour répondre à cette exigence et pour s'affranchir des difficultés liées d'une part, à la non disponibilité de films de très faible épaisseur sur le marché et d'autre part, à la difficulté de mise en oeuvre de films de très faible épaisseur qui ont une très faible résistance mécanique, une solution consiste à adapter la section de la bande continue de sorte que le rapport volumique entre le produit obturant et le film reste contenu dans les taux acceptables tels que définis ci-dessus.

Il en résulte que le rapport entre la section de la bande et sa circonférence doit être supérieur à une grandeur donnée, proportionnelle à l'épaisseur de la bande. Ainsi, pour une épaisseur de film donnée, plus on cherche à diminuer le taux de dilution plus on devra augmenter la section de la bande. En pratique, on s'arrange pour que le rapport entre la section de la bande et son périmètre soit supérieur ou égal à 100 fois l'épaisseur du film et, de préférence, supérieur ou égale à 330 fois l'épaisseur du film.

Cette situation a pour conséquence, pour une épaisseur de film donnée, d'imposer la section de la bande de produit auto-obturant. On observe néanmoins que ce choix technique peut poser des problèmes de maîtrise de la thermique lors de l'extrusion de ces bandes, mais également de rendre la bande difficilement utilisable dans les procédés de transformation aval en raison de sa trop grande taille.

L'invention a pour objet de proposer un procédé et un dispositif aptes à résoudre le problème posé ci-dessus.

Selon l'invention, le procédé de fabrication d'une bande continue de produit auto-obturant à base d'élastomère, ladite bande étant destinée à l'alimentation d'une machine de transformation, et au cours duquel on dépose à la surface de la bande un film de protection thermoplastique comprend les étapes au cours desquelles:
- on extrude une bande de produit auto-obturant selon une première section,
- en sortie de la filière d'extrusion on entoure la bande sur tout son périmètre à l'aide d'un film thermoplastique en soudant le film sur lui-même.

Ce procédé se caractérise en ce que, après avoir déposé le film autour de la bande, on lamine la bande pour la ramener à une deuxième section inférieure à la première section.

En procédant de la sorte, de préférence pendant que la bande est encore chaude, on peut ajuster la section de la bande au niveau de la filière d'extrusion pour avoir le taux de dilution recherché, et on ramène la section de la bande à la section permettant un refroidissement plus homogène du coeur de la bande et correspondant à la section imposée par le moyen d'alimentation du dispositif de transformation que la bande est destinée à alimenter.

L'invention prévoit également un dispositif d'extrusion et de conditionnement selon la revendication 11 apte à mettre en oeuvre le procédé selon l'invention. Ce dispositif, destiné à la réalisation d'une bande continue d'un produit auto-obturant comprend une filière d'extrusion de section donnée S₀, et un moyen de filmage apte à déposer un film autour du périmètre de ladite bande.

Ce dispositif se caractérise en ce que, en aval du moyen de filmage, sont disposés un ou plusieurs jeu de rouleaux, chaque jeu comprenant au moins deux rouleaux formant un entrefer, et dont les axes sont disposés dans un même plan et définissent une section fermée (S₁, S₂,), à l'intérieur de laquelle la bande est destinée à circuler, lesdits rouleaux étant placés de sorte que ladite section ait une aire inférieure à la section de la filière, et inférieure à la section du jeu de rouleaux placé immédiatement en amont dans le sens de circulation de la bande.
Le document FR 2 528 350 décrit un dispositif d'extrusion et de conditionnement selon le préambule de la revendication 11.

Ce dispositif, qui n'affecte pas le taux de dilution du film dans le matériau auto-obturant, permet de réduire la section de la bande d'une première section correspondant à la section de la filière d'extrusion, à une seconde section correspondant à la section du moyen de transformation.

La description qui suit permettra de mieux comprendre l'invention, et s'appuie sur les figures 1 à 3 dans lesquelles :
- la figure 1 représente un dispositif conforme à l'invention,
- la figure 2 représente un jeux de rouleaux conforme à une fore d'exécution préférentielle de l'invention,
- La figure 3 représente une vue schématique d'un tackmètre à bille.

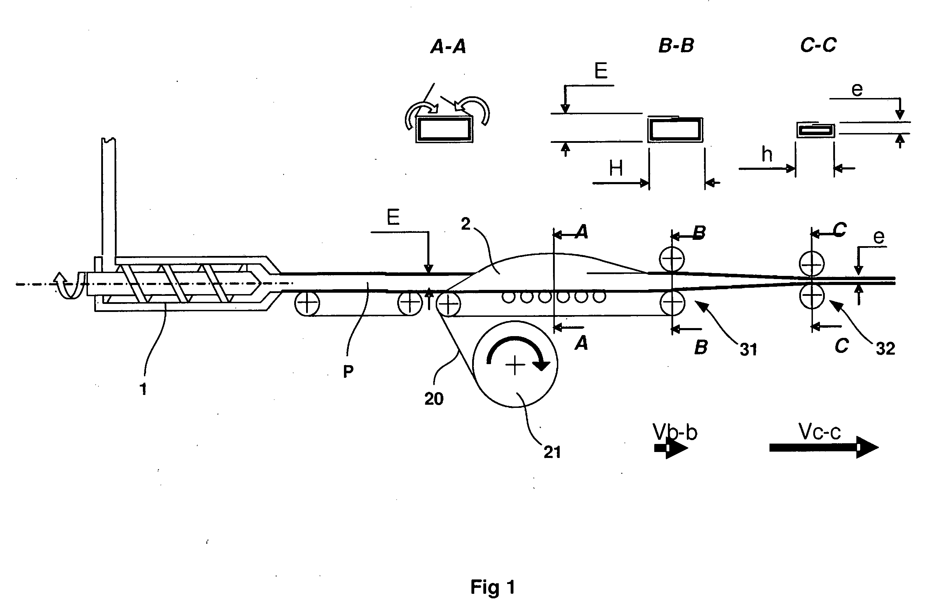

Le dispositif d'extrusion et de conditionnement décrit à la figure 1, comprend un moyen d'extrusion 1 débouchant dans une filière d'extrusion 10, au travers de laquelle le produit auto-obturant P s'écoule. La section S₀ du produit P sortant correspond à la section de la filière 10 et correspond à ladite première section.

Des moyens de filmage 2, sont disposés en aval du moyen d'extrusion. Le film thermoplastique 20 est déroulé depuis un moyen de stockage 21 et enroulé en continu sur tout le périmètre de la bande de produit auto-obturant, comme cela est illustré sur la vue AA.

L'emballage complet se fait en recouvrant une partie du film sur lui-même. A ce stade il peut s'avérer particulièrement intéressant de choisir un film dont le point de fusion est inférieur à la température du produit auto-obturant en sortie de filière au moment où l'on emballe le film autour de la bande. De la sorte, la soudure du film sur lui-même s'effectue sans qu'il soit besoin de mettre en oeuvre des moyens particuliers, par simple mise en recouvrement des deux lèvres longitudinales du film. En pratique, on choisira un film dont le point de fusion est inférieur à 110°C et de préférence inférieur à 80°C. Un point de fusion compris entre 60°C et 90°C, semblerait correspondre à la gamme des températures de sortie de filière d'extrusion de la bande de produit auto-obturant les plus communément observées.

Une fois le film déposé sur la bande de produit auto-obturant, on peut procéder à la phase de laminage et de réduction de la section de la bande pour l'adapter aux conditions d'alimentation des dispositifs de transformations auxquels la bande est destinée.

La réduction de la section de la bande s'effectue à l'aide d'un ou plusieurs jeux de rouleaux 31, 32. Les axes des rouleaux d'un même jeu sont placés dans un même plan et les rouleaux définissent un entrefer 320, tel qu'illustré à la figure 2, à l'intérieur duquel circule la bande de produit auto-obturant recouverte de son film de protection 20.

Le nombre de rouleaux compris dans un jeu dépend de la forme définitive que l'on souhaite donner à la bande de produit auto-obturant. Un jeu de deux rouleaux permet de procéder au laminage par écrasement de la bande mais nécessite de disposer immédiatement en aval de ce jeux un jeu de deux autres rouleaux dont les axes sont orientés dans une direction différente pour obtenir l'effet recherché, à savoir la réduction de la section de la bande.

A titre préférentiel, le mode de réalisation le plus adapté consiste à utiliser quatre rouleaux (321, 322, 323, 324) de forme sensiblement cylindrique par jeu. Les rouleaux 321, 322, 323, 324 ont des axes appartenant au même plan, les axes des rouleaux 324 et 323 et les axes des rouleaux 321 et 322 sont respectivement parallèles entre eux., et perpendiculaires deux à deux. Ils définissent un entrefer 320 de section rectangulaire fermée, correspondant à la zone hachurée de la figure 2. On s'arrange alors pour que la section de cet entrefer S₁, soit inférieure à la section de la bande en sortie de filière.

Avec un jeu comprenant deux trois ou quatre rouleaux ou une pluralité de rouleaux, et en modifiant la forme et la concavité des génératrices des rouleaux, on peut également produire une bande de section sensiblement circulaire présentant une compacité optimale. Et, pour obtenir une bande dont la section a un profil donné, l'homme du métier n'aura pas de mal à déterminer le nombre et la forme optimale des rouleaux définissant l'entrefer.

En disposant de la sorte un ou plusieurs jeux de rouleaux dont la section diminue dans le sens de circulation de la bande, on diminue progressivement la section de la bande jusqu'à obtenir la deuxième section recherchée. Le premier jeu de rouleaux 31 définit une section rectangulaire S₁ égale à ExH, et le jeu de rouleaux 32, situé en aval du jeu 31, définit une section rectangulaire S₂ égale à e x h inférieure à S₁.

De manière préférentielle, l'opération de laminage et de réduction de la section de la bande de produit auto-obturant s'effectue à chaud pour profiter des propriétés plastiques du matériau auto-obturant à ces températures, mais également pour autoriser l'extension du film thermoplastique. En d'autres termes, on s'arrange pour choisir un film thermoplastique dont le point de ramollissement est inférieur à la température du produit auto-obturant après que la bande ait été ramenée à ladite deuxième section. En pratique, on choisira un film dont le point de ramollissement VICA est compris entre 40°C et 60°C.

On adaptera la motorisation des rouleaux de laminage de manière à faire évoluer la vitesse circonférentielle des rouleaux et correspondant à la vitesse de circulation de la bande (Vb-b, Vc-c), en fonction de la diminution de la section de la bande, laquelle vitesse augmente en proportion inverse de la variation de section.

Après avoir ramené la bande à ladite deuxième section (S₂), on refroidit la bande à la température ambiante.

## Revendications

1. Procédé de fabrication d'une bande continue de produit auto-obturant de très faible dureté, très élastique et fortement collant, ladite bande étant destinée à l'alimentation d'une machine de transformation, au cours duquel on dépose à la surface de la bande un film de protection thermoplastique et comprenant les étapes au cours desquelles :
- on extrude une bande de produit auto-obturant P selon une première section (S₀),
- en sortie de la filière d'extrusion (10), on entoure la bande sur tout son périmètre à l'aide d'un film thermoplastique (20) en soudant le film sur lui-même,
**caractérisé en ce que**,
- après avoir déposé le film (20) autour de la bande, on lamine la bande pour la ramener à une deuxième section (S₂), inférieure à la première section (S₀).

2. Procédé selon la revendication 1, dans lequel, au cours de l'étape de laminage, la bande de produit auto-obturant a une température supérieure au point de ramollissement du film.

3. Procédé selon la revendication 1 ou 2 dans lequel la première section (S₀) de la bande est définie de sorte que le rapport entre la section de la bande et son périmètre, soit supérieur ou égal à 100 fois l'épaisseur du film et de préférence supérieur ou égal à 330 fois l'épaisseur du film.

4. Procédé selon l'une des revendications 1 à 3, dans lequel on choisit un film thermoplastique ayant une température de fusion inférieure à 110°C et de préférence inférieure à 80°C, et dans lequel au cours de l'étape de filmage, le produit auto-obturant à une température supérieure à la température de fusion du film de protection.

5. Procédé selon la revendication 4, dans lequel la soudure du film sur lui-même se fait par la mise en contact du film avec le produit auto-obturant..

6. Procédé selon l'une des revendications 1 à 5, dans lequel, après avoir ramené la bande à ladite deuxième section (S₂), on refroidit la bande à la température ambiante.

7. Procédé selon l'une des revendications 1 à 6, dans lequel le produit auto-obturant comporte, à titre d'élastomère majoritaire un thermoplastique élastomère styrénique choisi parmi les élastomères tels que :
- les styrène/butadiène (SB),
- les styrène/isoprène (SI),
- les styrène/isobutylène (SIB),
- les styrène/éthylène/propylène (SEP),
- les styrène/éthylène/butylène (SEB),
- les styrène/butadiène/styrène (SBS),
- les styrène/isoprène/styrène (SIS),
- les styrène/butadiène/isoprène/styrène (SBIS),
- les styrène/iso butylène/styrène (SIBS),
- les styrène/éthylène/butylène/styrène (SEBS),
- les styrène/éthylène/propylène/styrène (SEPS),
- les styrène/éthylène/éthylène/propylène/styrène (SEEPS)
- et les mélanges de ces copolymères.

8. Procédé selon l'une des revendications 1 à 7 le produit auto-obturnant comporte, à titre d'élastomère majoritaire un élastomère diénique choisi parmi les élastomères tels que :
- le polybutadiène,
- le caoutchouc naturel,
- les polyisoprènes de synthèse,
- les copolymères de butadiènes,
- les copolymères d'isoprène
- et les mélanges de ces élastomères.

9. Procédé selon l'une des revendications 1 à 8, dans lequel le film d'emballage est à base majoritaire d'éthylène Vinyle Acétate.

10. Procédé selon l'une des revendications 1 à 9, dans lequel le film d'emballage est à base majoritaire de Polyoléfine Elastomère.

11. Dispositif d'extrusion et de conditionnement destiné à la réalisation d'une bande continue d'un produit auto-obturant, comprenant une filière d'extrusion de section donnée (S₀), un moyen de filmage (2) apte à déposer un film (20) autour du périmètre de ladite bande, **caractérisé en ce que**, en aval du moyen de filmage (2) sont disposés un ou plusieurs jeu de rouleaux (31, 32), chaque jeu comprenant au moins deux rouleaux formant un entrefer et dont les axes sont disposés dans un même plan et définissent une section fermée (S₁, S₂,), à l'intérieur de laquelle la bande est destinée à circuler, lesdits rouleaux étant placés de sorte que ladite section (S₁, S₂ ait une aire inférieure à la section (S₀) de la filière, et inférieure à la section du jeu de rouleaux placé immédiatement en amont dans le sens de circulation de la bande.

12. Dispositif selon la revendication 11 comprenant au moins un jeu de rouleaux formé de quatre rouleaux (321, 322, 323, 324), disposés de telle sorte que l'entrefer (320) définit par le jeu de rouleaux ait une section rectangulaire.

13. Dispositif selon la revendication 12 comprenant au moins un jeu de rouleaux formé d'une multiplicité de rouleaux (321, 322, 323, 324), disposés de telle sorte que l'entrefer (320) définit par le jeu de rouleaux ait une section sensiblement circulaire.

14. Dispositif selon la revendication 11 ou 12 comportant des moyens de motorisation des rouleaux dont la vitesse circonférentielle est adaptée de sorte que la vitesse de défilement augmente proportionnellement par rapport à la diminution de la section de la bande.

## Patentansprüche

1. Verfahren für die Herstellung eines ununterbrochenen Bandes eines sehr elastischen und stark klebenden selbstverschließenden Produkts mit sehr geringer Härte, wobei mit dem Band eine Transformationsmaschine versorgt wird, in dessen Verlauf auf der Oberfläche des Bandes ein thermoplastischer Schutzfilm abgelagert wird und das die Schritte umfasst, in deren Verlauf:
- ein Band P eines selbstverschließenden Produkts mit einem ersten Querschnitt (S_{c}) stranggepresst wird und
- am Ausgang der Spritzdüse (10) das Band auf seinem gesamten Umfang mit Hilfe eines thermoplastischen Films (20) umwickelt wird, indem der Film auf sich selbst geschweißt wird,
**dadurch gekennzeichnet, dass**
- nachdem der Film (20) um das Band aufgebracht worden ist, das Band laminiert wird, um ihm einen zweiten Querschnitt (S₂) zu verleihen, der kleiner als der erste Querschnitt (S_{c}) ist.

2. Verfahren nach Anspruch 1, wobei im Schritt des Laminierens das Band des selbstverschließenden Produkts eine Temperatur besitzt, die höher ist als der Erweichungspunkt des Films.

3. Verfahren nach Anspruch 1 oder 2, wobei der erste Querschnitt (S_{c}) des Bandes in der Weise definiert ist, dass das Verhältnis zwischen dem Querschnitt des Bandes und seinem Umfang größer oder gleich der 100-fachen Dicke des Films und vorzugsweise größer oder gleich der 330-fachen Dicke des Films ist.

4. Verfahren nach einem der Ansprüche 1 bis 3, wobei ein thermoplastischer Film gewählt wird, der eine Schmelztemperatur unterhalb von 110 °C und vorzugsweise unterhalb von 80 °C besitzt und wobei im Filmbildungsschritt das selbstverschließende Produkt eine Temperatur hat, die höher ist als die Schmelztemperatur des Schutzfilms.

5. Verfahren nach Anspruch 4, wobei das Schweißen des Films auf sich selbst durch Herstellen eines Kontakts zwischen dem Film und dem selbstverschließenden Produkt erfolgt.

6. Verfahren nach einem der Ansprüche 1 bis 5, wobei, nachdem dem Band der zweite Querschnitt (S₂) verliehen worden ist, das Band auf Umgebungstemperatur abgekühlt wird.

7. Verfahren nach einem der Ansprüche 1 bis 6, wobei das selbstverschließende Produkt einen elastomeren Styrol-Thermoplasten umfasst, der unter den folgenden Elastomeren gewählt wird:
- Styrol-Butadien (SB),
- Styrol-Isopren (SI),
- Styrol-Isobutylen (SIB),
- Styrol-Ethylen-Propylen (SEP),
- Styrol-Ethylen-Butylen (SEB),
- Styrol-Butadien-Styrol (SBS),
- Styrol-Isopren-Styrol (SIS),
- Styrol-Butadien-Isopren-Styrol (SBIS),
- Styrol-Isobutylen-Styrol (SIBS),
- Styrol-Ethylen-Butylen-Styrol (SEBS),
- Styrol-Ethylen-Propylen-Styrol (SEPS),
- Styrol-Ethylen-Ethylen-Propylen-Styrol (SEEPS)
- und die Gemische dieser Copolymere.

8. Verfahren nach einem der Ansprüche 1 bis 7, wobei das selbstverschließende Produkt als Hauptelastomer ein Dien-Elastomer enthält, das aus den folgenden Elastomeren gewählt wird:
- Polybutadien,
- Naturkautschuk,
- synthetische Polyisoprene,
- Butadien-Copolymere,
- Isopren-Copolymere
- und die Gemische dieser Elastomere.

9. Verfahren nach einem der Ansprüche 1 bis 8, wobei der Verpackungsfilm Ethylenvinylacetat als Hauptgrundstoff besitzt.

10. Verfahren nach einem der Ansprüche 1 bis 9, wobei der Verpackungsfilm Polyolefinelastomer als Hauptgrundstoff besitzt.

11. Strangpress- und Verpackungsvorrichtung, die dazu bestimmt ist, ein ununterbrochenes Band eines selbstverschließenden Produkts herzustellen, mit einer Strangpressdüse mit gegebenem Querschnitt (S_{c}) und einem Filmbildungsmittel (2), das um den Umfang des Bandes einen Film (20) ablagern kann, **dadurch gekennzeichnet, dass** stromabseitig des Filmbildungsmittels (2) ein oder mehrere Rollensätze (31, 32) angeordnet sind, wobei jeder Satz wenigstens zwei Rollen besitzt, die einen Spalt bilden und deren Achsen in derselben Ebene angeordnet sind und die einen geschlossenen Querschnitt (S₁, S₂) bilden, in dem das Band zirkulieren soll, wobei die Rollen in der Weise angeordnet sind, dass der Querschnitt (S₁, S₂) eine Fläche besitzt, die kleiner ist als jene des Querschnitts (S_{c}) der Düse und kleiner als der Querschnitt des Satzes von Rollen, der in Umlaufrichtung des Bandes unmittelbar vorher angeordnet ist.

12. Vorrichtung nach Anspruch 11, die wenigstens einen Rollensatz umfasst, der aus vier Rollen (321, 322, 323, 324) gebildet ist, die in der Weise angeordnet sind, dass der Spalt (320), der durch den Rollensatz definiert ist, einen rechtwinkligen Querschnitt besitzt.

13. Vorrichtung nach Anspruch 12, die wenigstens einen Rollensatz umfasst, der aus mehreren Rollen (321, 322, 323, 324) gebildet ist, die in der Weise angeordnet sind, dass der durch den Rollensatz definierte Spalt (320) einen im Wesentlichen kreisförmigen Querschnitt besitzt.

14. Vorrichtung nach Anspruch 11 oder 12, die Antriebsmittel für die Rollen umfasst, deren Umlaufgeschwindigkeit in der Weise angepasst ist, dass die Vorbeibewegungsgeschwindigkeit proportional zu der Verringerung des Querschnitts des Bandes zunimmt.

## Claims

1. Process for manufacturing a continuous strip of self-sealing product having very low hardness, being very elastic and highly tacky, said strip being intended for feeding a converting machine, during which a thermoplastic protective film is deposited on the surface of the strip, and comprising the steps during which:
- a strip of self-sealing product P is extruded to a first cross section (S₀),
- at the outlet of the extrusion die (10), the strip is surrounded over its entire perimeter using a thermoplastic film (20) by welding the film to itself,
**characterized in that**,
- after having deposited the film (20) around the strip, the strip is calendered in order to bring it down to a second cross section (S₂), smaller than the first cross section (S₀).

2. Process according to Claim 1, in which, during the calendering step, the strip of self-sealing product has a temperature above the softening point of the film.

3. Process according to Claim 1 or 2, in which the first cross section (S₀) of the strip is defined so that the ratio between the cross section of the strip and its perimeter is greater than or equal to 100 times the thickness of the film, and preferably greater than or equal to 330 times the thickness of the film.

4. Process according to one of Claims 1 to 3, in which a thermoplastic film having a melting point below 110°C and preferably below 80°C is chosen, and in which, during the film application step, the self-sealing product has a temperature above the melting point of the protective film.

5. Process according to Claim 4, in which the welding of the film to itself is carried out by bringing the film into contact with the self-sealing product.

6. Process according to one of Claims 1 to 5, in which, after having brought the strip down to said second cross section (S₂), the strip is cooled to ambient temperature.

7. Process according to one of Claims 1 to 6, in which the self-sealing product comprises, as predominant elastomer, a styrene thermoplastic elastomer chosen from elastomers such as:
- styrene/butadiene (SB),
- styrene/isoprene (SI),
- styrene/isobutylene (SIB),
- styrene/ethylene/propylene (SEP),
- styrene/ethylene/butylene (SEB),
- styrene/butadiene/styrene (SBS),
- styrene/isoprene/styrene (SIS),
- styrene/butadiene/isoprene/styrene (SBIS),
- styrene/isobutylene/styrene (SIBS),
- styrene/ethylene/butylene/styrene (SEBS),
- styrene/ethylene/propylene/styrene (SEPS),
- styrene/ethylene/ethylene/propylene/styrene (SEEPS)
- and mixtures of these copolymers.

8. Process according to one of Claims 1 to 7, in which the self-sealing product comprises, as predominant elastomer, a diene elastomer chosen from elastomers such as:
- polybutadiene,
- natural rubber,
- synthetic polyisoprenes,
- butadiene copolymers,
- isoprene copolymers,
- and mixtures of these elastomers.

9. Process according to one of Claims 1 to 8, in which the packaging film is predominantly based on ethylene vinyl acetate.

10. Process according to one of Claims 1 to 9, in which the packaging film is predominantly based on polyolefin elastomer.

11. Extrusion and packaging device intended for the production of a continuous strip of a self-sealing product, comprising an extrusion die of given cross section (S₀), a film application means (2) capable of depositing a film (20) around the perimeter of said strip, **characterized in that**, positioned downstream of the film application means (2) are one or more sets of rolls (31, 32), each set comprising at least two rolls forming a nip and the axes of which are positioned in one and the same plane and define a closed cross section (S₁, S₂,), inside which the strip is intended to travel, said rolls being placed so that said cross section (S₁, S₂) has an area smaller than the cross section (S₀) of the die, and smaller than the cross section of the set of rolls placed immediately upstream in the direction of travel of the strip.

12. Device according to Claim 11, comprising at least one set of rolls formed of four rolls (321, 322, 323, 324), positioned so that the nip (320) defined by the set of rolls has a rectangular cross section.

13. Device according to Claim 12, comprising at least one set of rolls formed of a multiplicity of rolls (321, 322, 323, 324), positioned so that the nip (320) defined by the set of rolls has a substantially circular cross section.

14. Device according to Claim 11 or 12, comprising roll motorization means, the circumferential speed of which rolls is adapted so that the run speed increases proportionally relative to the decrease in the cross section of the strip.
